# EUROPEAN PATENT SPECIFICATION

(11) **EP 2 521 337 B1**
(45) Date of publication and mention of the grant of the patent: **17.06.2020**
(21) Application number: 12162468.8
(22) Date of filing: 30.03.2012
(51) Int. Cl.: H04L 29/08

(54) **Method and system for connecting devices**
Verfahren und System zum Anschließen von Vorrichtungen
Procédé et système pour la connexion de dispositifs

(30) Priority: 04.05.2011 KR 20110042634
(43) Date of publication of application: 07.11.2012
(73) Proprietor: Samsung Electronics Co., Ltd., Suwon-si, Gyeonggi-do, 443-742 (KR)
(72) Inventor: Jeong, Jin-guk, Gyeonggi-do (KR); Kim, Nam-hoon, Gyeonggi-do (KR); Park, Jae-seok, Seoul (KR); Byun, Mu-hong, Gyeonggi-do (KR); Song, Eun-young, Gyeonggi-do (KR); Oh, Jung-hyun, Gyeonggi-do (KR); Won, Young-min, Gyeonggi-do (KR); Ryu, Je-hyok, Suwon-si (KR); Lee, Jeong-soo, Gyeonggi-do (KR)
(74) Representative: HGF Limited

(56) References cited:
- EP-A1- 1 718 030
- WO-A1-2006/007439
- WO-A2-2008/052188
- WO-A2-2008/135848
- US-A1- 2008 247 313
- US-A1- 2010 045 422
- US-A1- 2010 107 221

## Description

### TECHNICAL FIELD OF THE INVENTION

The present invention relates to a method and a system for connecting devices.

### BACKGROUND OF THE INVENTION

Connections and data exchanges between devices are performed to copy or reproduce contents such as images, video, audio, and documents. For connecting devices, a device corresponding to a source and a device corresponding to a destination need to be predetermined in order to transfer data or messages there-between.

In addition, conventional connections between devices are static using uniform resource identifiers (URIs) or Internet protocol (IP) addresses, and it is not currently possible to search for desired device groups and connect to device groups. Furthermore, conventionally, most connections are point-to-point connections.

US-2010/107221-A1 discloses a method of providing a service to a network device from a group of network devices, some but not all of the network devices being subscribed to said service, the method comprising determining which network devices of the group are not subscribed to said service in response to a service request from one of the network devices of said group; querying at least the network devices of the group that are subscribed to said service for permission to at least temporarily share the service with an unsubscribed network device; and at least temporarily providing the service to at least some of the unsubscribed network devices in response to a positive response to said query from at least one of the subscribed network devices. A network, network device and network server that can implement various aspects of this method are also disclosed.

WO-2006/007439-A1 discloses a system and method for communicating with a subset of nodes. A node filter is generated representing a set of transmission preferences of at least one node in a set of nodes. The node filter for each node is stored either at the node, or at a central server located remotely from the node. A communication abstract is generated representing the target audience, a subset of nodes, for a communication. The communication abstract and communication are transmitted to the nodes, and the communication abstract is compared to each node filter. Based on the comparison, a determination is made whether to display the communication at the node.

WO-2008/135848-A2 discloses a method for multimedia communication using multiple devices in a network. In an example embodiment, a request for a communication session may be received at a first server. Parameters associated with the communication session may be negotiated. One or more of the devices included in a group of one or more devices associated with a first user may be selected for receipt of one or more portions of a requested transmission based on the negotiated parameters.

US2008/247313 A1 relates to techniques for collecting and displaying sensor data captured by a spatially and temporally representative sample of sensors requested in a search query.

### SUMMARY OF THE INVENTION

It is an aim of certain embodiments of the invention to solve, mitigate or obviate, at least partly, at least one of the problems and/or disadvantages associated with the prior art.

According to an aspect of the present invention, there is provided a method of connecting devices, the method being performed by a system including an apparatus for connecting devices, the apparatus comprising a communication unit and a control unit, the method comprising: receiving, by the apparatus, from a first device, a request to select a plurality of second devices having device properties within a certain range according to predetermined selection conditions required by the first device; generating, at the apparatus, a virtual device channel for connecting the plurality of second devices to the first device such that information is exchanged between the first device and the plurality of second devices via the virtual device channel; receiving, by the apparatus, information related to the plurality of second devices from the plurality of second devices; processing, by the apparatus, the received information related to the plurality of second devices; transmitting, by the apparatus, the processed information related to the plurality of second devices to the first device via the virtual device channel; receiving, by the apparatus, information from the first device; and transmitting, by the apparatus, the received information to the plurality of second devices via the virtual device channel; wherein the information received from the first device is generated by the first device in response to receiving the processed information related to the plurality of second devices; and wherein the processing comprises processing the received information related to the plurality of second devices as information about an application that is most frequently used by the plurality of second devices.

The information related to the second device may be location information of the plurality of second devices.

At the least one of the information related to the second device and the processed information may be formed as a structured message in a machine readable language.

The structured message can be formed in one of javascript object notation (JSON), eXtensible markup language (XML), resource description framework (RDF), or Web ontology language (OWL).

The request to select can comprise a request to follow the plurality of second devices, and the method further comprising setting a following relationship between the plurality of second devices and the first device such that the first device is arranged to receive some or all messages and information generated and transmitted by the plurality of second devices or the plurality of second devices are arranged to receive some or all messages and information generated and transmitted by the first device.

The setting of the following relationship between the first device and the plurality of second devices can comprise setting a following relationship so that the first device follows the plurality of second devices such that the first device is arranged to receive all messages and information generated and transmitted by the plurality of second devices.

The setting of the following relationship between the first device and the plurality of second devices can comprise setting a following relationship so that the plurality of second devices follow the first device such that the plurality of second devices are arranged to receive all messages and information generated and transmitted by the first device.

According to another aspect of the present invention, there is provided a system comprising: an apparatus for connecting devices, the apparatus comprising: a communication unit configured to receive, from a first device, a request to select a plurality of second devices having device properties within a certain range according to predetermined selection conditions required by the first device; and a control unit configured to generate a virtual device channel that connects the plurality of second devices to the first device; and process received information related to the plurality of second devices; wherein the control unit is configured to process the received information related to the plurality of second devices as information about an application that is most frequently used by the plurality of second devices; wherein the communication unit is configured to receive the information related to the second devices from the plurality of second devices and to transmit the processed information to the first device via the virtual device channel; wherein the communication unit is configured to receive information from the first device; and wherein the communication unit is configured to transmit the received information to the plurality of second devices via the virtual device channel; and a first device comprising a processor configured to: transmit the request to select a plurality of second devices in a certain range according to predetermined selection conditions required by the first device; receive the processed information related to the second devices from the apparatus; generate information in response to receiving the processed information related to the plurality of second devices; and transmit the information to the apparatus.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a method of connecting devices according to a non claimed example;
FIGURE 2 illustrates a method of connecting devices according to a non claimed example;
FIGURE 3 illustrates an example process for connecting devices illustrated in FIGURE 2;
FIGURE 4 illustrates a process for connecting devices according to the present invention;
FIGURE 5 illustrates an example process for connecting devices illustrated in FIGURE 4; and
FIGURE 6 illustrates an apparatus for connecting devices according to a non claimed example.

### DETAILED DESCRIPTION OF THE INVENTION

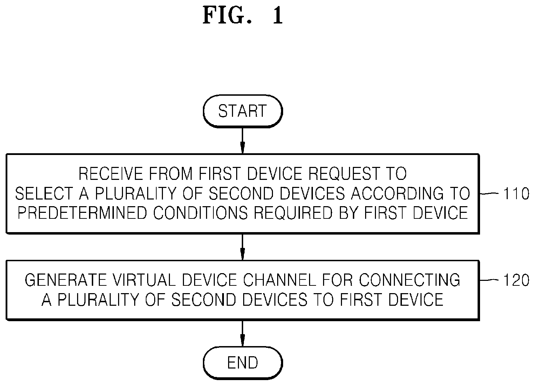

FIGURES 1 through 6, discussed below, and the various examples used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. Examples of the present invention will be described with reference to accompanying drawings.

FIGURE 1 illustrates a method of connecting devices according to a non claimed example.

Referring to FIGURE 1, in operation S110, a device connecting apparatus receives, from a first device, a request to select a plurality of second devices according to predetermined conditions required by the first device. The first device generates a request to select a plurality of devices included in a certain range, that is, a device group, not a single device. For example, the first device, such as a Galaxy@ smart-phone, can request to select a group of Galaxy@ smart-phones having the same version of software located in Seoul. The selection request can be a following request. That is, the device connecting apparatus receives, from the first device, a request to follow a group of the plurality of second devices according to predetermined conditions required by the first device. The first device is a follower and the group of the second devices is a followee. In the present embodiment, following means following between devices, not between users.

In operation S120, the device connecting apparatus generates a virtual device channel connecting the plurality of second devices and the first device to each other. Then, the virtual device channel is generated for transmitting data between the first device and the second device group. If the selection request is the following request, the device connecting apparatus sets a following relationship between the first device, that is, the follower, and the second device group, that is, the followee, in response to the request. When the following relationship is set, the device connecting apparatus receives predetermined information from the second device group, that is, the followee, and transmits the received information or information obtained by processing the received information to the first device, that is, the follower.

The terms "follower device" and "followee device" as used throughout the present specification are used in the context of a first device and a second device which have a following relationship. By "following relationship" it is meant that the first device is arranged to receive some or all messages and information generated and transmitted by the second device. In this context the first device comprises a follower device in the sense that it "follows" the second device, that is it is arranged to receive messages and information generated and transmitted the second device. In this context the second device is the followee device. The first device could alternatively be called the "following device" and the second device could alternatively be called the "followed device". In certain embodiments "follow" may signify that the follower device has some pre-existing interest in, or relationship to, the followee device, though this is not necessarily the case.

As shown in FIGURE 1, the device can generate a group of devices including anonymous users actively.

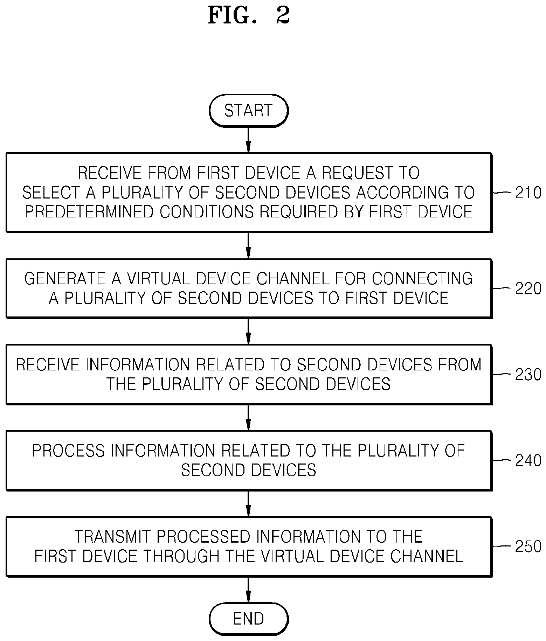

FIGURE 2 illustrates a process for connecting devices according to a non claimed example.

Referring to FIGURE 2, operations S210 and S220 are the same as the operations S110 and S120 of FIGURE 1, and thus, detailed descriptions thereof are not provided here.

In operation S230, the device connecting apparatus receives information about the second devices from the plurality of second devices. The device connecting apparatus receives data generated in the second device group. For example, the device connecting apparatus receives application usage history data from each of the second devices. The information related to the second device refers to event information collectable by the second device, for example, device specification information, device state information, device sensing information, device operation information, user event information, user information in the device, or device usage information. The device specification information is information such as a device identification (ID), a device type, a device name, or a device production date, that is, the information determined when fabricating or selling the device. The device state information is information obtained from a device system, for example, setting information of the device, a central processing unit (CPU) usage amount, or a CPU usage time. The device sensing information is information obtained from a sensor formed in the device, for example, location information such as global positioning system (GPS) coordinates or an external temperature. The device operation information is information representing a current operation of the device. The user event information is information representing that the device reaches a certain operation or state of the device designated by the user. The user information in the device is user information such as a user ID or a personal information management system (PIMS). The device usage information is history information representing the usage of a certain function by the user. However, the above information is merely exemplary, and the present invention is not limited thereto.

In operation S240, the device connecting apparatus processes the information related to the second device. The device connecting apparatus stores and analyses the received information related to the second devices received from the second device group to process the information. For example, the device connecting apparatus receives the information from the Galaxy@ smart-phones, that is, the second device group, and can process the information as information relating to an application that is the most favorite between the users of the Galaxy@ smart-phones.

In addition, the device connecting apparatus generates a transmittable message by using the processed information. More particularly, the second device converts a format of the processed information to structured machine readable language that is comprehensible to the device. In the present specification, a structured message comprehensible to the device is referred to as a device message. In the present embodiment, the structured message type that is comprehensible by the device is one of JavaScript Object Notation (JSON), eXtensible MarkUp Language (XML), Resource Description Framework (RDF), or Web Ontology Language (OWL).

Otherwise, the device connecting apparatus can generate the information related to the second devices transmitted from the second device group without processing the information.

In operation S250, the device connecting apparatus transmits the processed information to the first device through the virtual device channel. The device connecting apparatus transmits the processed information as the device message format to the first device through the virtual device channel. Otherwise, the device connecting apparatus can transmit the information related to the second devices that is not processed to the first device in the device message format.

According to the embodiment illustrated in FIGURE 2, the device can generate the group of devices including anonymous users actively, and receive statistical information easily.

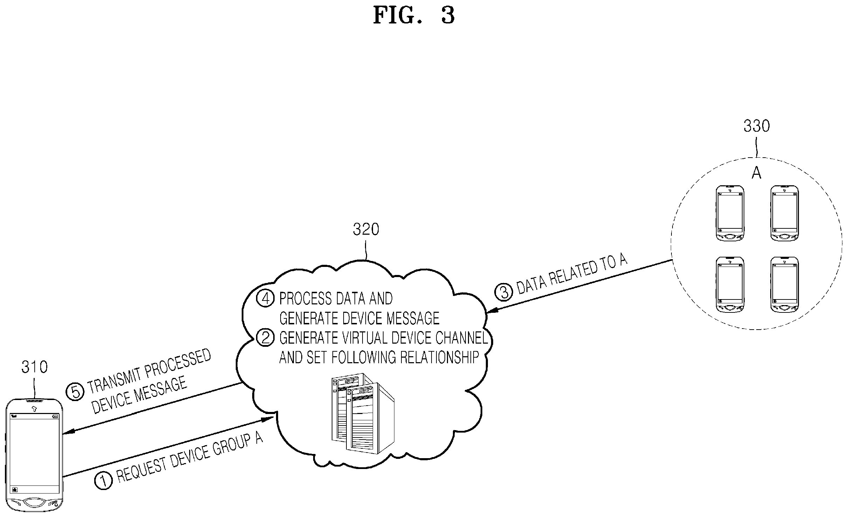

FIGURE 3 illustrates for connecting devices illustrated in FIGURE 2.

Referring to FIGURE 3, a mobile device 310 that is a first device transmits a request to follow a group A of second devices 330 to a server 320 that is a device connecting apparatus. The server 320 generates a virtual device channel between the mobile device 310 and the second device group A 330. That is, the mobile device 310 is a follower and the second device group A 330 is a followee. The server 320 receives data related to the group A from the second device group A 330, and processes the data. For example, when the server 320 receives data about application user history from the second device group A 330, the server 320 according to the invention processes the data as information about the application that is the most frequently used in the second device group A 330. Thereafter, the server 320 converts the processed data into a device message, and transmits the device message to the mobile device 310.

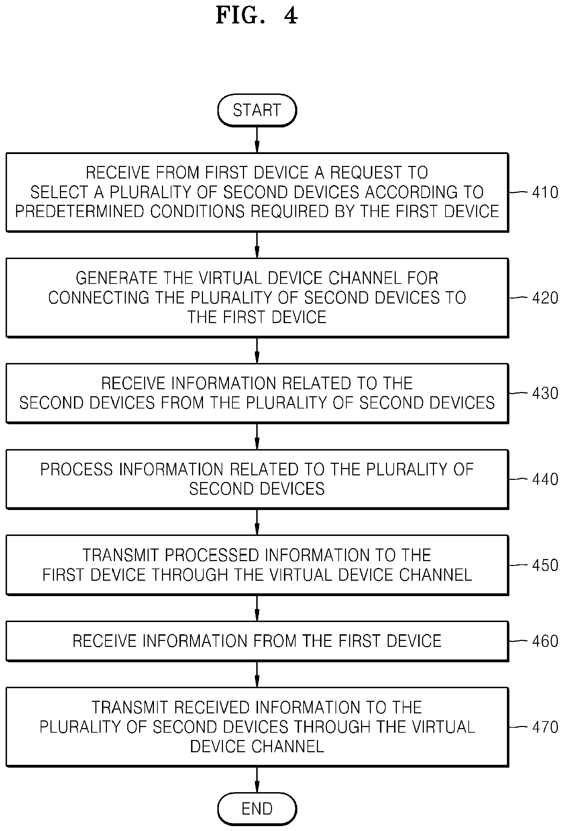

FIGURE 4 illustrates a process for connecting devices according to the present invention.

Referring to FIGURE 4, operation S410 is the same as the operation S110 of FIGURE 1, and thus, detailed descriptions are not provided.

In operation S420, a device connecting apparatus sets a virtual device channel connecting a plurality of second devices to a first device. Then, the virtual device channel is generated for transmitting data between the first device and a group of the second devices. Unlike the embodiment illustrated in FIGURE 1, if the selection request is a following request, the device connecting apparatus sets a following relationship between the first device that is a follower and the second device group that is a followee, and a following relationship between the first device that is a followee and the second device group that is a follower in response to the request to follow. That is, a bi-directional following relationship is set between the first device and the second device group.

Operations S430 through S450 are the same as the operations S230 through S250 illustrated in FIGURE 2, and thus, descriptions of the operations S430 through S450 are not provided.

In operation S460, the device connecting apparatus receives information about the second device group from the first device. For example, the information can include advertisement or coupons required in the second device group.

In operation S470, the device connecting apparatus transmits the information to the plurality of second devices through the virtual device channel.

According to the embodiment of FIGURE 4, the first device can transmit target advertisement to the selected device group due to the bi-directional following relationship.

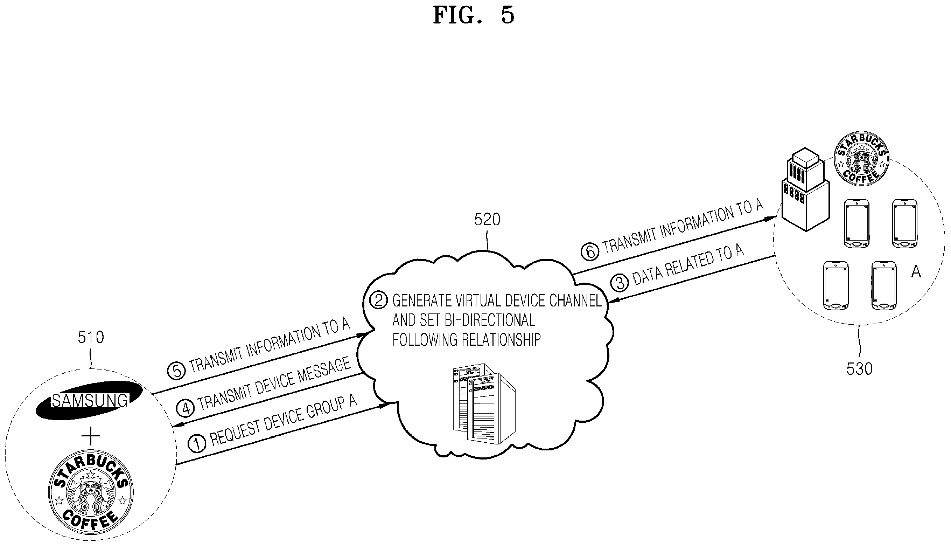

FIGURE 5 illustrates an example of the method illustrated in FIGURE 4.

Referring to FIGURE 5, a first device 510 relating to cooperative marketing between companies transmits to a server 520 that is the device connecting apparatus a request to connect to a second device group A 530. For example, the first device 510 related to cooperative marketing of Samsung Electronics and Starbucks® coffee requests to connect to a Samsung Galaxy@ smart-phone existing near a Starbucks® coffee shop. The connecting request can be a following request. The server 520 generates a virtual device channel between the first device 510 and the second device group A 530. Thus, a bi-directional following relationship is set between the first device 510 that is either the follower or the followee and the second device group A 530 that is either the followee or the follower. The server 520 receives data related to the second device group A 530 from the second device group A 530, and converts the data into the device message with or without processing the data and transmits the device message to the first device 510. For example, when the server 520 receives location information from the second device group A 530, the server 520 converts the location information into a device message and transmits the device message to the first device 510. Thereafter, the first device 510 transmits information to be provided to the second device group A 530 to the server 520, and the server 520 transmits the information to the second device group A 530. For example, the first device 510 analyses the received location information, and then, the first device 510 transmits advertisement or coupon information related to Starbucks® coffee to the server 520 and the server 520 transmits the advertisement or coupon information to the second device group A 530.

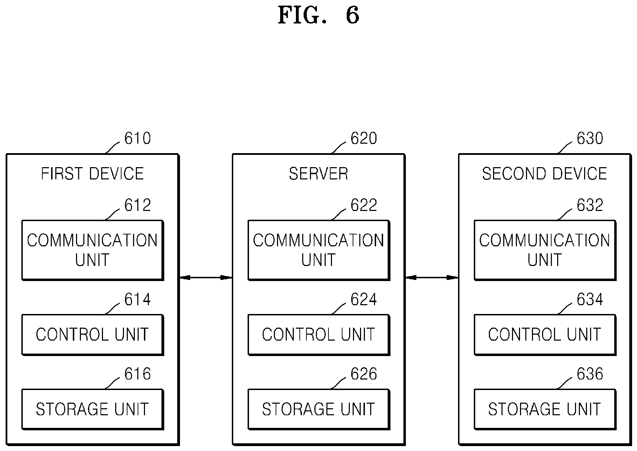

FIGURE 6 illustrates a device connecting apparatus according to a non claimed example.

Referring to FIGURE 6, a server 620 that is the device connecting apparatus connects a first device 610 and a second device 630 to each other. Referring to FIGURE 6, the second device 630 is a group of a plurality of devices. The first device 610, the server 620, and the second device 630 respectively include communication units 612, 622, and 632, control units 614, 624, and 634, and storage units 616, 626, and 636.

The communication unit 622 of the server 620 receives a request to select a plurality of second devices 630 from the first device 610 according to predetermined conditions required by the first device 610. The control unit 614 of the first device 610 does not request to select a certain single device, but does request to select a plurality of devices included in a range, that is, a device group to the server 620 via the communication unit 612 of the first device 610. For example, the first device 610, such as a Galaxy@ smartphone, requests to select a group of Galaxy@ smartphones having the same version of software. The selection request can be a following request. That is, the communication unit 622 of the server 620 receives a request to follow the second device group according to predetermined conditions required by the first device 610 from the first device 610. The first device 610 becomes a follower, and the second device group 630 becomes a followee. In the present embodiment, the following relationship is set between the devices, not between users.

The control unit 624 of the server 620 generates a virtual device channel for connecting the plurality of second devices 630 to the first device 610. Then, the virtual device channel for transmitting data between the first device 610 and the second device 630 group is generated. If the selection request is the following request, the control unit 624 of the server 620 sets the following relationship between the first device 610 that is the follower and the second device 630 group that is the followee in response to the following request. When the following relationship is set, device connecting apparatus receives predetermined information from the second device 630 group that is the followee, and transmits the received information or information obtained by processing the received information to the first device 610 that is the follower. In another example, the control unit 624 of the server 620 sets a following relationship between the first device 610 that is the follower and the second device group 630 that is the followee and a following relationship between the first device 610 that is the followee and the second device 630 group that is the follower, in response to the following request. That is, the bi-directional following relationship between the first device 610 and the second device 630 group can be set.

The communication unit 622 of the server 620 receives information related to the plurality of second devices 630 from the plurality of second devices 630. The device connecting apparatus receives the data generated in the second device 630 group. For example, the communication unit 622 receives data about application using history from the second device 630 group. The information relating to the second device is the event information that can be collected by the second device group 630, and can include device specification information, device state information, device sensing information, device operation information, user event information, user information in the device, or device usage information. The device specification information is information such as a device ID, a device type, a device name, or a device production date, that is, the information determined when fabricating or selling the device. The device state information is information obtained from a device system, for example, setting information of the device, a CPU usage amount, or a CPU usage time. The device sensing information is information obtained from a sensor formed in the device, for example, location information such as GPS coordinates or an external temperature. The device operation information is information representing a current operation of the device. The user event information is information representing that the device reaches a certain operation or state of the device designated by the user. The user information in the device is user information such as a user ID or a PIMS. The device usage information is history information representing the usage of a certain function by the user. However, the above information is merely exemplary, and the present invention is not limited thereto.

The control unit 624 of the server 620 processes the received information relating to the plurality of second devices 630. The control unit 624 of the server 620 stores the information related to the second device transmitted from the second device 630 group in the storage unit 626 of the server 620, and analyses the information to process it. For example, the server 620 receives information from the Galaxy@ smart-phones that are the second devices 630, and after that, can process the information as information about the application that is the most frequently used between users of the Galaxy@ smartphones.

The control unit 624 of the server 620 generates a message that is transmittable by using the processed information. In more detail, the control unit 824 of the server 620 converts the processed information into a structured machine readable language format that is comprehensible to the device. In the present embodiment, a structured message type that is comprehensible to the device is one of JavaScript Object Notation (JSON), eXtensible MarkUp Language (XML), Resource Description Framework (RDF), or Web Ontology Language (OWL).

Otherwise, the control unit 624 of the server 620 can generate the device message without processing the information related to the second devices 630 transmitted from the second device 630 group.

The communication unit 622 of the server 620 transmits the processed information to the first device 610 through the virtual device channel. The communication unit 622 of the server 620 transmits the information processed as the device message format to the first device 610 through the virtual device channel. Otherwise, the communication unit 624 can transmit the information related to the second device 630 that is not processed to the first device 610 as the device message format.

If the following relationship is bi-directional, the communication unit 622 of the server 620 receives information related to the second device 630 group, for example, advertisement or coupon information required by the second device 630 group, from the first device 610, and can transmit the received information to the second device 630 group via the virtual device channel.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers of ordinary skill in the art to which the present invention pertains.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of connecting devices, the method being performed by a system including an apparatus for connecting devices, the apparatus comprising a communication unit (622) and a control unit (624), the method comprising:
receiving (410), by the apparatus, from a first device (610), a request to select a plurality of second devices (630) having device properties within a certain range according to predetermined selection conditions required by the first device (610);
generating (420), at the apparatus, a virtual device channel for connecting the plurality of second devices (630) to the first device (610) such that information is exchanged between the first device (610) and the plurality of second devices (630) via the virtual device channel;
receiving (430), by the apparatus, information related to the plurality of second devices (630) from the plurality of second devices (630);
processing (440), by the apparatus, the received information related to the plurality of second devices (630);
transmitting (450), by the apparatus, the processed information related to the plurality of second devices (630) to the first device (610) via the virtual device channel;
receiving (460), by the apparatus, information from the first device (610); and
transmitting (470), by the apparatus, the received information to the plurality of second devices (630) via the virtual device channel;
wherein the information received from the first device (610) is generated by the first device (610) in response to receiving the processed information related to the plurality of second devices (630); and
wherein the processing (440) comprises processing the received information related to the plurality of second devices (630) as information about an application that is most frequently used by the plurality of second devices (630).

2. The method of claim 1, wherein the information related to the second device (630) is location information of the plurality of second devices (630).

3. The method of claim 2, wherein at least one of the information related to the second device (630) and the processed information is formed as a structured message in a machine readable language.

4. The method of claim 3, wherein the structured message is formed in one of javascript object notation, JSON, eXtensible markup language, XML, resource description framework, RDF, or Web ontology language, OWL.

5. The method of any one of the preceding claims, wherein the request to select comprises a request to follow the plurality of second devices (630), and the method further comprising setting a following relationship between the plurality of second devices (630) and the first device (610) such that the first device (610) is arranged to receive some or all messages and information generated and transmitted by the plurality of second devices (630) or the plurality of second devices (630) are arranged to receive some or all messages and information generated and transmitted by the first device (610).

6. The method of claim 5, wherein the setting of the following relationship between the first device (610) and the plurality of second devices (630) comprises setting a following relationship so that the first device (610) follows the plurality of second devices (630) such that the first device (610) is arranged to receive all messages and information generated and transmitted by the plurality of second devices (630).

7. The method of claim 5 or claim 6, wherein the setting of the following relationship between the first device (610) and the plurality of second devices (630) comprises setting a following relationship so that the plurality of second devices (630) follow the first device (610) such that the plurality of second devices (630) are arranged to receive all messages and information generated and transmitted by the first device (610).

8. A system comprising:
an apparatus for connecting devices, the apparatus comprising:
a communication unit (622) configured to receive (410), from a first device (610), a request to select a plurality of second devices (630) having device properties within a certain range according to predetermined selection conditions required by the first device (610); and
a control unit (624) configured to:
generate (420) a virtual device channel that connects the plurality of second devices (630) to the first device (610); and
process received information related to the plurality of second devices (630);
wherein the control unit (624) is configured to process the received information related to the plurality of second devices (630) as information about an application that is most frequently used by the plurality of second devices (630);
wherein the communication unit (622) is configured to receive (430) the information related to the second devices (630) from the plurality of second devices (630) and to transmit (450) the processed information to the first device (610) via the virtual device channel;
wherein the communication unit (622) is configured to receive (460) information from the first device (610); and
wherein the communication unit (622) is configured to transmit (470) the received information to the plurality of second devices (630) via the virtual device channel; and
a first device (610) comprising a processor configured to:
transmit the request to select a plurality of second devices (630) in a certain range according to predetermined selection conditions required by the first device (610);
receive (450) the processed information related to the second devices (630) from the apparatus;
generate information in response to receiving the processed information related to the plurality of second devices (630); and
transmit (460) the information to the apparatus.

9. The system of claim 8, wherein the control unit (624) is configured to set a following relationship so that the plurality of second devices (630) follow the first device (610) such that the plurality of second devices (630) are arranged to receive all messages and information generated and transmitted by the first device (610).

## Patentansprüche

1. Verfahren zum Verbinden von Vorrichtungen, wobei das Verfahren durch ein System ausgeführt wird, das ein Gerät zum Verbinden von Vorrichtungen beinhaltet, das Gerät umfassend eine Kommunikationseinheit (622) und eine Steuereinheit (624), das Verfahren umfassend:
Empfangen (410), durch das Gerät von einer ersten Vorrichtung (610), einer Anforderung zum Auswählen einer Vielzahl von zweiten Vorrichtungen (630), die Vorrichtungseigenschaften innerhalb eines gewissen Bereichs gemäß vorbestimmter Auswahlbedingungen aufweisen, die von der ersten Vorrichtung (610) gefordert werden;
Erzeugen (420), auf dem Gerät, eines virtuellen Vorrichtungskanals zum Verbinden der Vielzahl von zweiten Vorrichtungen (630) mit der ersten Vorrichtung (610), sodass Informationen zwischen der ersten Vorrichtung (610) und der Vielzahl von zweiten Vorrichtungen (630) über den virtuellen Vorrichtungskanal ausgetauscht werden;
Empfangen (430), durch das Gerät, von Informationen in Bezug auf die Vielzahl von zweiten Vorrichtungen (630) von der Vielzahl von zweiten Vorrichtungen (630);
Verarbeiten (440), durch das Gerät, der empfangenen Informationen in Bezug auf die Vielzahl von zweiten Vorrichtungen (630);
Senden (450), durch das Gerät, der verarbeiteten Informationen in Bezug auf die Vielzahl von zweiten Vorrichtungen (630) an die erste Vorrichtung (610) über den virtuellen Vorrichtungskanal;
Empfangen (460), durch das Gerät, von Informationen von der ersten Vorrichtung (610); und
Senden (470), durch das Gerät, der empfangenen Informationen an die Vielzahl von zweiten Vorrichtungen (630) über den virtuellen Vorrichtungskanal;
wobei die von der ersten Vorrichtung (610) empfangenen Informationen von der ersten Vorrichtung (610) als Reaktion auf ein Empfangen der verarbeiteten Informationen in Bezug auf die Vielzahl von zweiten Vorrichtungen (630) erzeugt werden; und
wobei das Verarbeiten (440) ein Verarbeiten der empfangenen Informationen in Bezug auf die Vielzahl von zweiten Vorrichtungen (630) als Informationen über eine Anwendung umfasst, die von der Vielzahl von zweiten Vorrichtungen (630) am häufigsten verwendet wird.

2. Verfahren nach Anspruch 1, wobei die Informationen in Bezug auf die zweite Vorrichtung (630) Standortinformationen der Vielzahl von zweiten Vorrichtungen (630) sind.

3. Verfahren nach Anspruch 2, wobei mindestens eine von den Informationen in Bezug auf die zweite Vorrichtung (630) und den verarbeiteten Informationen als strukturierte Nachricht in einer maschinenlesbaren Sprache gebildet ist.

4. Verfahren nach Anspruch 3, wobei die strukturierte Nachricht in einem von JavaScript Objekt Notation, JSON, erweiterbare Auszeichnungssprache, XML, Resource Description Framework, RDF, oder Web Ontology Language, OWL gebildet ist.

5. Verfahren nach einem der vorherigen Ansprüche, wobei die Anforderung zum Auswählen eine Anforderung zum Folgen der Vielzahl von zweiten Vorrichtungen (630) umfasst, und das Verfahren ferner umfassend ein Einstellen eines Folgeverhältnisses zwischen der Vielzahl von zweiten Vorrichtungen (630) und der ersten Vorrichtung (610), sodass die erste Vorrichtung (610) angeordnet ist, um einige oder alle Nachrichten und Informationen zu empfangen, die durch die Vielzahl von zweiten Vorrichtungen (630) erzeugt und übertragen werden, oder die Vielzahl von zweiten Vorrichtungen (630) angeordnet ist, um einige oder alle Nachrichten und Informationen zu empfangen, die von der ersten Vorrichtung (610) erzeugt und übertragen werden.

6. Verfahren nach Anspruch 5, wobei das Einstellen des Folgeverhältnisses zwischen der ersten Vorrichtung (610) und der Vielzahl von zweiten Vorrichtungen (630) ein Einstellen eines Folgeverhältnisses umfasst, sodass die erste Vorrichtung (610) der Vielzahl von zweiten Vorrichtungen (630) folgt, sodass die erste Vorrichtung (610) angeordnet ist, um alle Nachrichten und Informationen zu empfangen, die von der Vielzahl von zweiten Vorrichtungen (630) erzeugt und übertragen werden.

7. Verfahren nach Anspruch 5 oder Anspruch 6, wobei das Einstellen des Folgeverhältnisses zwischen der ersten Vorrichtung (610) und der Vielzahl von zweiten Vorrichtungen (630) ein Einstellen eines Folgeverhältnisses umfasst, sodass die Vielzahl von zweiten Vorrichtungen (630) der ersten Vorrichtung (610) folgt, sodass die Vielzahl von zweiten Vorrichtungen (630) angeordnet ist, um alle Nachrichten und Informationen zu empfangen, die von der ersten Vorrichtung (610) erzeugt und übertragen werden.

8. System, umfassend:
ein Gerät zum Verbinden von Vorrichtungen, das Gerät umfassend:
eine Kommunikationseinheit (622), die konfiguriert ist, um von einer ersten Vorrichtung (610) eine Anforderung zum Auswählen einer Vielzahl von zweiten Vorrichtungen (630) zu empfangen (410), die Vorrichtungseigenschaften innerhalb eines gewissen Bereichs gemäß vorbestimmter Auswahlbedingungen aufweisen, die von der ersten Vorrichtung (610) gefordert werden; und
eine Steuereinheit (624), die zu Folgendem konfiguriert ist:
Erzeugen (420) eines virtuellen Vorrichtungskanals, der die Vielzahl von zweiten Vorrichtungen (630) mit der ersten Vorrichtung (610) verbindet; und
Verarbeiten empfangener Informationen in Bezug auf die Vielzahl von zweiten Vorrichtungen (630);
wobei die Steuereinheit (624) konfiguriert ist, um die empfangenen Informationen in Bezug auf die Vielzahl von zweiten Vorrichtungen (630) als Informationen über eine Anwendung zu verarbeiten, die von der Vielzahl von zweiten Vorrichtungen (630) am häufigsten verwendet wird;
wobei die Kommunikationseinheit (622) konfiguriert ist, um die Informationen in Bezug auf die zweiten Vorrichtungen (630) von der Vielzahl von zweiten Vorrichtungen (630) zu empfangen (430), und um die verarbeiteten Informationen über den virtuellen Vorrichtungskanal an die erste Vorrichtung (610) zu senden (450);
wobei die Kommunikationseinheit (622) konfiguriert ist, um Informationen von der ersten Vorrichtung (610) zu empfangen (460); und
wobei die Kommunikationseinheit (622) konfiguriert ist, um die empfangenen Informationen über den virtuellen Vorrichtungskanal an die Vielzahl von zweiten Vorrichtungen (630) zu senden (470); und
eine erste Vorrichtung (610), umfassend einen Prozessor, der zu Folgendem konfiguriert ist:
Senden der Anforderung zum Auswählen einer Vielzahl von zweiten Vorrichtungen (630) in einem gewissen Bereich gemäß vorbestimmter Auswahlbedingungen, die von der ersten Vorrichtung (610) gefordert werden;
Empfangen (450) der verarbeiteten Informationen in Bezug auf die zweiten Vorrichtungen (630) von dem Gerät;
Erzeugen von Informationen als Reaktion auf ein Empfangen der verarbeiteten Informationen in Bezug auf die Vielzahl von zweiten Vorrichtungen (630); und
Senden (460) der Informationen an das Gerät.

9. System nach Anspruch 8, wobei die Steuereinheit (624) konfiguriert ist, um ein folgendes Verhältnis einzustellen, sodass die Vielzahl von zweiten Vorrichtungen (630) der ersten Vorrichtung (610) folgt, sodass die Vielzahl von zweiten Vorrichtungen (630) angeordnet ist, um alle Nachrichten und Informationen zu empfangen, die von der ersten Vorrichtung (610) erzeugt und gesendet werden.

## Revendications

1. Procédé de connexion de dispositifs, le procédé étant exécuté par un système comprenant un appareil de connexion de dispositifs, l'appareil comprenant une unité de communication (622) et une unité de commande (624), le procédé comprenant :
la réception (410), par l'appareil, depuis un premier dispositif (610), d'une demande de sélection d'une pluralité de seconds dispositifs (630) ayant des propriétés de dispositif dans une certaine plage selon des conditions de sélection prédéterminées requises par le premier dispositif (610) ;
la génération (420), au niveau de l'appareil, d'un canal de dispositif virtuel pour connecter la pluralité de seconds dispositifs (630) au premier dispositif (610) de telle sorte que des informations soient échangées entre le premier dispositif (610) et la pluralité de seconds dispositifs (630) via le canal de dispositif virtuel ;
la réception (430), par l'appareil, d'informations relatives à la pluralité de seconds dispositifs (630) depuis la pluralité de seconds dispositifs (630) ;
le traitement (440), par l'appareil, des informations reçues relatives à la pluralité de seconds dispositifs (630) ;
la transmission (450), par l'appareil, des informations traitées relatives à la pluralité de seconds dispositifs (630) au premier dispositif (610) via le canal de dispositif virtuel ;
la réception (460), par l'appareil, d'informations depuis le premier dispositif (610) ; et
la transmission (470), par l'appareil, des informations reçues à la pluralité de seconds dispositifs (630) via le canal de dispositif virtuel ;
dans lequel les informations reçues depuis le premier dispositif (610) sont générées par le premier dispositif (610) en réponse à la réception des informations traitées relatives à la pluralité de seconds dispositifs (630) ; et
dans lequel le traitement (440) comprend le traitement des informations reçues relatives à la pluralité de seconds dispositifs (630) en tant qu'informations sur une application qui est la plus fréquemment utilisée par la pluralité de seconds dispositifs (630).

2. Procédé selon la revendication 1, dans lequel les informations relatives au second dispositif (630) sont des informations d'emplacement de la pluralité de seconds dispositifs (630).

3. Procédé selon la revendication 2, dans lequel au moins l'une des informations relatives au second dispositif (630) et les informations traitées sont formées sous la forme d'un message structuré dans un langage lisible par machine.

4. Procédé selon la revendication 3, dans lequel le message structuré est formé dans l'un des formats parmi : la notation d'objet javascript, JSON, le langage de balisage extensible, XML, le cadre de description de ressource, RDF, ou le langage d'ontologie Web, OWL

5. Procédé selon l'une quelconque des revendications précédentes, dans lequel la demande de sélection comprend une demande pour suivre la pluralité de seconds dispositifs (630), et le procédé comprenant en outre l'établissement d'une relation suivante entre la pluralité de seconds dispositifs (630) et le premier dispositif (610) de telle sorte que le premier dispositif (610) soit agencé pour recevoir tout ou partie des messages et informations générés et transmis par la pluralité de seconds dispositifs (630) ou la pluralité de seconds dispositifs (630) sont agencés pour recevoir tout ou partie des messages et informations générés et transmis par le premier dispositif (610).

6. Procédé selon la revendication 5, dans lequel l'établissement de la relation suivante entre le premier dispositif (610) et la pluralité de seconds dispositifs (630) comprend l'établissement d'une relation suivante de sorte que le premier dispositif (610) suive la pluralité de seconds dispositifs (630) de telle sorte que le premier dispositif (610) soit agencé pour recevoir tous les messages et informations générés et transmis par la pluralité de seconds dispositifs (630).

7. Procédé selon la revendication 5 ou la revendication 6, dans lequel l'établissement de la relation suivante entre le premier dispositif (610) et la pluralité de seconds dispositifs (630) comprend l'établissement d'une relation suivante de sorte que la pluralité de seconds dispositifs (630) suivent le première dispositif (610) de telle sorte que la pluralité de seconds dispositifs (630) soient agencés pour recevoir tous les messages et informations générés et transmis par le premier dispositif (610).

8. Système comprenant :
un appareil de connexion de dispositifs, l'appareil comprenant :
une unité de communication (622) configurée pour recevoir (410), depuis un premier dispositif (610), une demande de sélection d'une pluralité de seconds dispositifs (630) ayant des propriétés de dispositif dans une certaine plage selon des conditions de sélection prédéterminées requises par le premier dispositif (610); et
une unité de commande (624) configurée pour :
générer (420) un canal de dispositif virtuel qui connecte la pluralité de seconds dispositifs (630) au premier dispositif (610) ; et
traiter des informations reçues relatives à la pluralité de seconds dispositifs (630) ;
dans lequel l'unité de commande (624) est configurée pour traiter les informations reçues relatives à la pluralité de seconds dispositifs (630) en tant qu'informations sur une application qui est la plus fréquemment utilisée par la pluralité de seconds dispositifs (630) ;
dans lequel l'unité de communication (622) est configurée pour recevoir (430) les informations relatives aux seconds dispositifs (630) depuis la pluralité de seconds dispositifs (630) et pour transmettre (450) les informations traitées au premier dispositif (610) via le canal de dispositif virtuel ;
dans lequel l'unité de communication (622) est configurée pour recevoir (460) des informations depuis le premier dispositif (610) ; et
dans lequel l'unité de communication (622) est configurée pour transmettre (470) les informations reçues à la pluralité de seconds dispositifs (630) via le canal de dispositif virtuel ; et
un premier dispositif (610) comprenant un processeur configuré pour :
transmettre la demande de sélection d'une pluralité de seconds dispositifs (630) dans une certaine plage selon des conditions de sélection prédéterminées requises par le premier dispositif (610) ;
recevoir (450) les informations traitées relatives aux seconds dispositifs (630) depuis l'appareil ;
générer des informations en réponse à la réception des informations traitées relatives à la pluralité de seconds dispositifs (630); et
transmettre (460) les informations à l'appareil.

9. Système selon la revendication 8, dans lequel l'unité de commande (624) est configurée pour établir une relation suivante de sorte que la pluralité de seconds dispositifs (630) suivent le premier dispositif (610) de telle sorte que la pluralité de seconds dispositifs (630) soient agencés pour recevoir tous les messages et informations générés et transmis par le premier dispositif (610).
